Europäisches Patentamt

European Patent Office

Office européen des brevets

(11) Publication number: **0 083 500**
**B1**

(12) **EUROPEAN PATENT SPECIFICATION**

(45) Date of publication of patent specification: **18.06.86**

(21) Application number: **82306944.8**

(22) Date of filing: **24.12.82**

(51) Int. Cl.⁴: **B 65 G 17/48**

(54) **Endless line conveyor.**

(30) Priority: **02.01.82 GB 8200010**

(43) Date of publication of application:
**13.07.83 Bulletin 83/28**

(45) Publication of the grant of the patent:
**18.06.86 Bulletin 86/25**

(84) Designated Contracting States:
**BE DE FR GB IT**

(56) References cited:
**FR-A-2 355 741**
**US-A-3 972 412**

(73) Proprietor: **WESTAL LIMITED**
**Pipers Road Park Farm**
**Redditch Worcestershire (GB)**

(72) Inventor: **Wesbrook, Arthur Leslie**
**40 Bear Hill**
**Alvechurch Worcestershire (GB)**

(74) Representative: **Evershed, Michael et al**
**Marks & Clerk Alpha Tower Suffolk Street**
**Queensway**
**Birmingham B1 ITT (GB)**

Courier Press, Leamington Spa, England.

## Description

This invention relates to an endless line conveyor of the type having a frame and including a pair of endless lines disposed parallel to each other and arranged to pass along a series of horizontal levels, a series of pairs of wheels rotatably mounted on the frame for guiding the lines for passage along said series of levels, and a series of trays pivotally mounted on the lines and normally disposed in a substantially horizontal orientation.

In FR—A—2 355 741 there is shown an endless line conveyor of the type described in which there is provided a guide rail and a turning device positioned on the frame by each pair of wheels to guide the trays during passage from level to another level so that the orientation remains substantially horizontal. The turning devices rotate continuously and suffer from the problem that the trays must be placed at regular intervals.

It is an object of this invention to provide a new or improved endless chain conveyors of the type described in which the aforementioned problem is overcome.

According to this invention, there is provided an endless line conveyor including a frame, a pair of endless lines disposed parallel to each other and arranged to pass along a series of horizontal levels, a series of pairs of wheels rotatably mounted on the frame for guiding the lines along said series of levels, a series of trays pivotally mounted on the lines and normally disposed in a substantially horizontal orientation, and at least one mechanism driven by a series of drive elements provided on one of said lines, the or each mechanism being associated with a respective one of said pair of wheels and arranged to guide each tray in turn during passage between the two levels associated with the mechanism so that the orientation of the trays remains substantially horizontal, characterized in that the or each mechanism is a reciprocating mechanism comprising first and second arms pivotally connected to the frame at spaced apart positions, and a third arm pivotally connected to the free ends of the first and second arms, the spacing between the pivotal connections on the first arm being equal to the spacing between the pivotal connections on the second arm and the spacing between the pivotal connections on the frame being equal to the spacing between the pivotal connections on the third arm, the third arm having secured thereto means for receiving the drive elements and means for guiding each tray in turn.

By providing a reciprocating mechanism as set out above, the trays may be disposed at irregular intervals.

This invention will now be described in more detail, by way of example, with reference to the accompanying drawings in which:—

Figure 1 is a fragmentary perspective view of part of an endless chain conveyor embodying this invention;

Figure 2 is a perspective view of the reciprocating mechanism forming part of the conveyor shown in Figure 1;

Figure 3 is a plan view which shows the pivotal connection between the trays and chains forming part of the conveyor;

Figure 4 is a plan view which shows an alternative arrangement of the pivotal connection between the trays and chains forming part of the conveyor;

Figures 5 is a sketch of an alternative arrangement of the reciprocating mechanism which forms part of the conveyor, and

Figures 6 and 7 are perspective views of modifications of the conveyor of Figure 1.

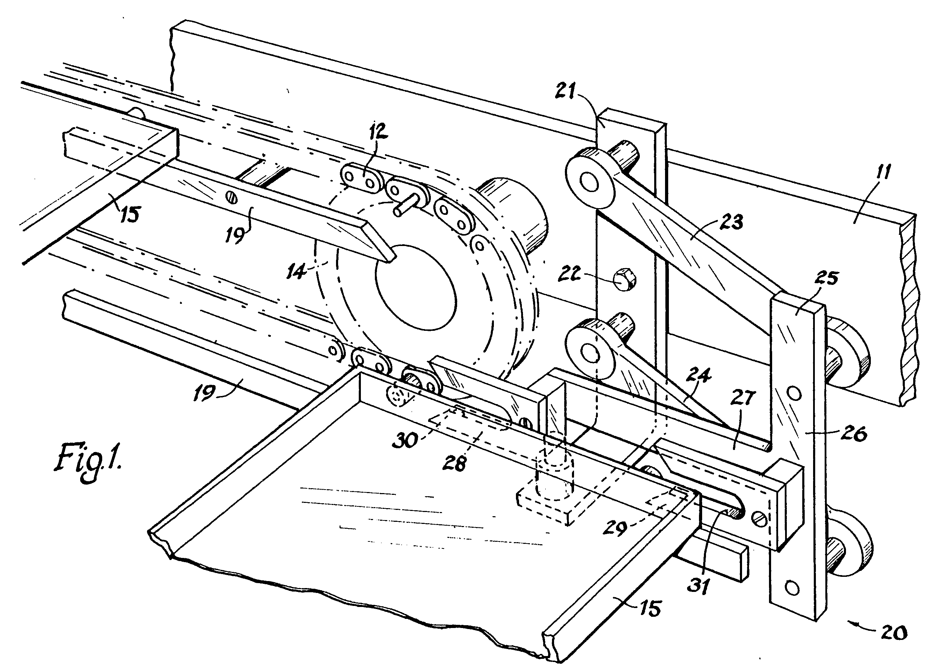

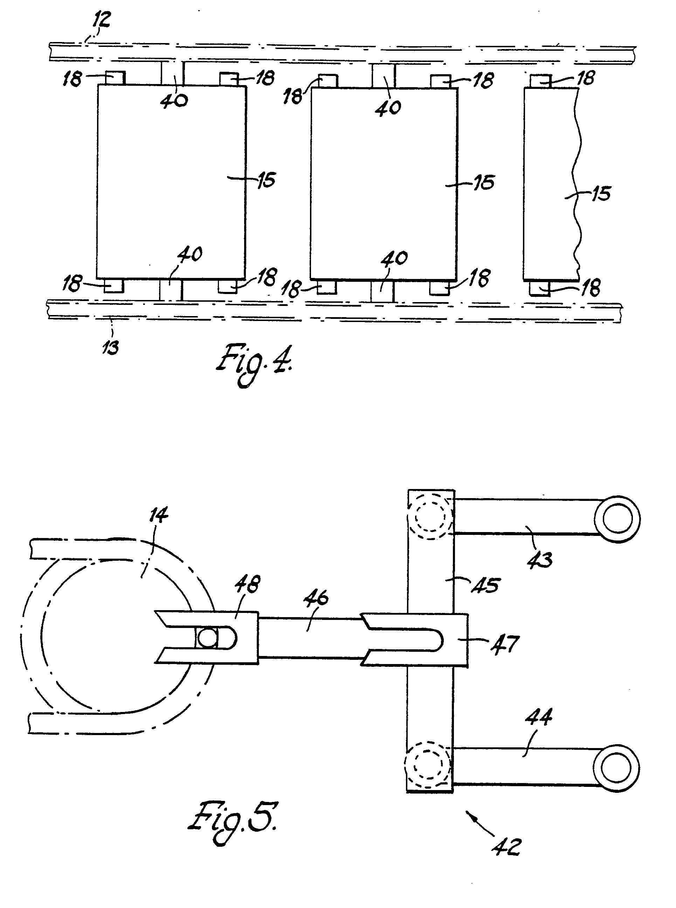

Referring now to Figures 1 and 3, there is shown part of an endless line conveyor which forms part of a confectionery machine. The conveyor comprises a frame 11 and a pair of lines in the form of a pair of chains 12 and 13 which are disposed parallel to each other and which are arranged to pass along a series of horizontal levels. Between each pair of levels, the chains 12, 13 are guided by a pair of sprocket wheels and one such wheel 14 is shown in Figure 1. A series of trays 15 for holding confectionery undergoing manufacture are mounted between the chains 12, 13. Each tray 15 is pivotally mounted on the chain 12 by a pin 16 and on the chain 13 by a pin 17. As may be seen in Figure 3, in order to maintain the trays in a substantially horizontal orientation during passage along the horizontal levels, the pins 16 and 17 are offset from each other in the direction of travel. In order to compensate for this offset, the axes of the two sprocket wheels of each pair of sprocket wheels are also offset relative to each other. Each of the trays 15 is also provided with two guide pins 18 for a purpose which will be described below.

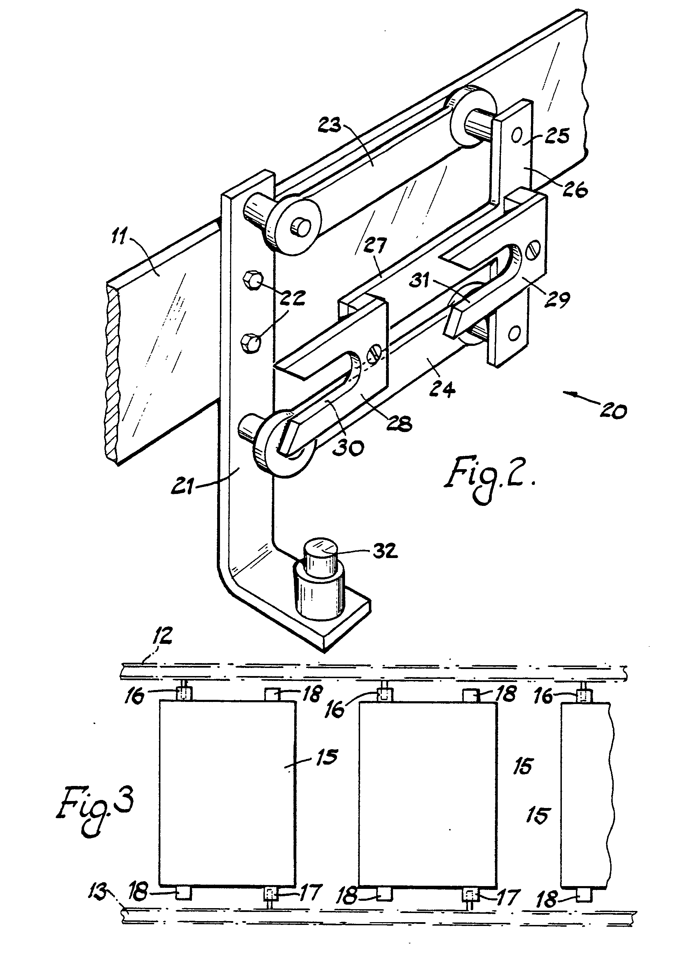

The sprocket wheel 14 is associated with a pair of guide rails 19 which engage the guide pins 18 so as to maintain the orientation of the trays substantially horizontal as they approach to and depart from the sprocket wheel 14. The sprocket wheel 12 is also associated with a reciprocating mechanism 20 which is shown in isolation in Figure 2. It is to be noted that only a single reciprocating mechanism 20 is provided for each pair of sprocket wheels.

Referring now to Figure 2, the reciprocating mechanism 20 comprises an L-shaped support member 21 which is secured by bolts 22 to the frame 12 so that it lies in a vertical plane. The mechanism 20 further comprises first and second arms 23 and 24 which are pivotally connected to the member 21 at spaced apart positions. A third arm 25 comprises a first part 26 pivotally connected to the free ends of the arms 23 and 24 and a part 27 which extends from the centre of the part 26 and at right angles thereto. It is to be noted that the spacing between the pivotal connections on the arms 23 and 24 are equal to each other and that the spacing between the pivotal connections on the part 26 is equal to the spacing between the pivotal connections on the support member 21.

Consequently, the part 26 always remains vertical and the part 27 always remains horizontal during movement of the reciprocating mechanism. The part 27 is provided with a pair of receiving elements 28 and 29 which are secured thereto at horizontally spaced apart locations and which are provided respectively with horizontally extending slots 30 and 31. Lastly the lower limb of the support member 21 is provided with a hydraulic damper 32 which retains the mechanism in its rest position, and damps oscillations when the mechanism falls to its rest position.

The operation of the conveyor will now be described.

In Figure 1, the trays 15 are passing from the lower level associated with the sprocket wheel 14 to the upper level. As each tray 15 approaches the reciprocating mechanism 20, its pin 16 engages the slot 30 of the element 28 and its guide pin 18 engages a slot 31 of the element 29. The pin 16 then functions as a drive pin and causes the part 27 to move upwardly. At the same time, the slot 31 ensures that the guide pin 18 remains horizontally in line with the pin 16 and consequently that the tray 15 remains in a substantially horizontal orientation. Then, as the tray 15 moves away from the guide mechanism 20, the pins 16 and 18 move out of engagement with the elements 28 and 29 and the reciprocating mechanism returns to its lower position by gravity.

If it is desired to use the operating mechanism 20 for guiding trays during passage from an upper level to a lower level, a spring must be provided for returning the mechanism to its upper position.

In order to permit the pins 16 and 18 to engage the slots 30 and 31, the spacing between the pivotal connections on the arms 23 and 24 is greater than the radius of the sprocket wheel 14. Therefore, some sliding does occur between the pins 16 and 18 and the elements 28 and 29 whilst the trays 15 are changing levels. Also, in order to limit the angle through which the arms 23 and 24 turn, and consequently the space which is required for the reciprocating mechanism, it is desirable that the spacing between these pivotal connections is substantially greater than the radius of the sprocket wheel 14. In the present example, the spacing is approximately 1.5 the radius of the sprocket wheel 14 and the arms 23 and 24 turn through an angle of approximately 90°, but these dimensions are not critical.

Some alternative arrangements of the present invention will now be describd with reference to Figures 4 to 7. In these figures elements which are similar to those already described with reference to Figures 1 to 3 are denoted by the same reference numerals.

As shown in Figure 4, the pivotal connections between chains 12 and 13 and the trays 15 may be provided by centrally positioned pins 40 which are in line with each other. Where this arrangement is adapted, each tray is provided with four guide pins 18. Also, the axis of the two sprocket wheels of each pair are in line with each other.

Figure 5 shows an alternative arrangement for the reciprocating mechanism. In Figure 5 there is shown a reciprocating mechanism 42 comprisng first and second arms 43 and 44 pivotally mounted to the frame and a third arm 45 pivotally connected to the free ends of the arms 43 and 44. The arm 45 includes a part 46 provided with receiving elements 47 and 48 for receiving respectively the pins 18 and the pins 16 or 40. It is to be noted that the pivotal connections between the arms 43 and 44 and the frame are on the opposite side of the arm 45 to the sprocket wheel 14 and that the part 46 extends from the arm 45 towards the sprocket wheel 14.

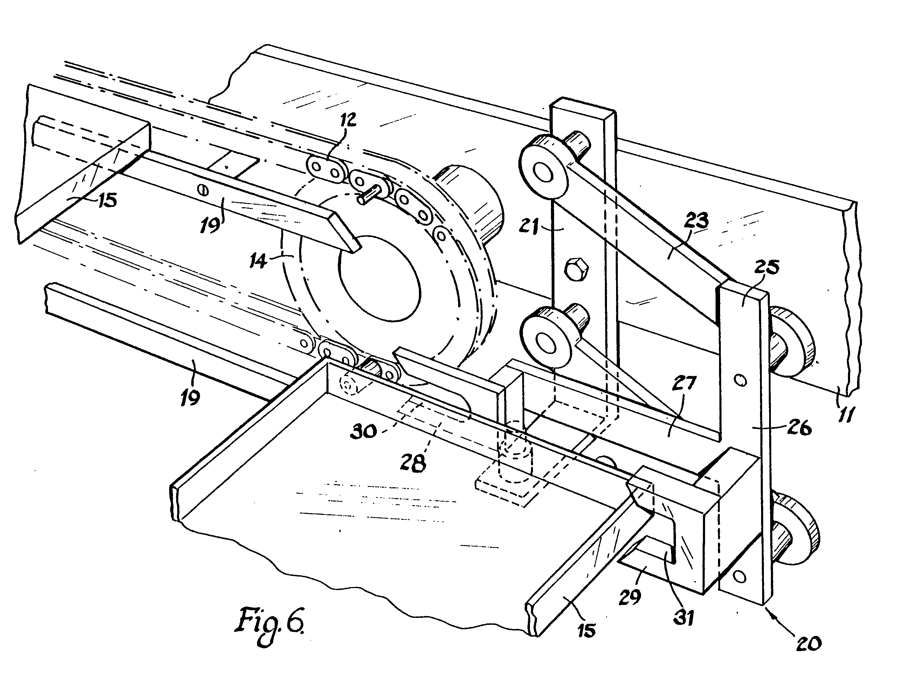

In Figure 6 there is shown a modification to the receiving element 29 of the reciprocating mechanism 20 in which the element 29 is arranged to receive and guide the leading edges of the trays 15. With this modification, the guide pins 18 may be omitted.

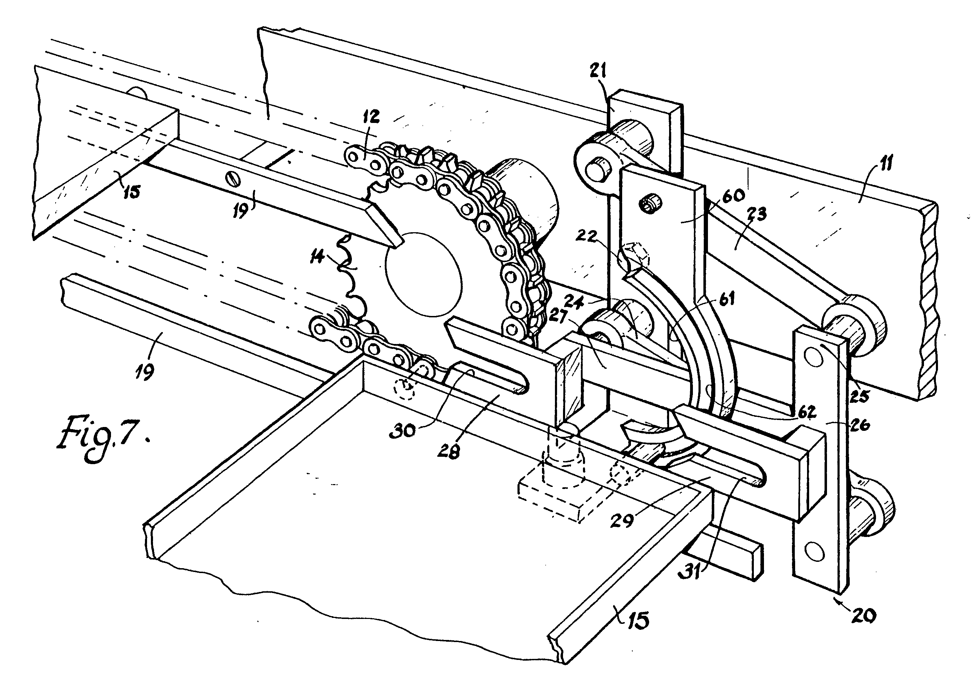

In Figure 7 there is shown an arrangement which includes a guide member 60. The guide member 60 takes the form of a plate which is positioned on the opposite side of the element 29 to the trays 15 and which has a semi-circular cutout 61 and a semi-circular groove 62. The radius of the groove 62 is equal to the radius of the sprocket wheels and the axis of groove 62 is in line with the axis of the other sprocket wheel which forms a pair of sprocket wheels with wheel 14. In operation, the pin 18 of each tray 15 engages the groove 62 thereby providing guidance for the tray 15 during passage between the two levels. The purpose of the guide member 62 is to provide guidance for each tray before its guide pin 18 engages the slot 31 and after it has departed from this slot thereby reducing the angle through which the reciprocating mechanism needs to turn. The central part of the groove 62 is provided purely for convenience of manufacture.

It is to be appreciated that the chains 12, 13 may be replaced by other types of lines such as ropes, 'V' belts, or wires.

**Claims**

1. An endless line conveyor including a frame (11), a pair of endless lines (12, 13) disposed parallel to each other and arranged to pass along a series of horizontal levels, a series of pairs of wheels (14) rotatably mounted on the frame (11) for guiding the lines (12, 13) along said series of levels, a series of trays (15) pivotally mounted on the lines (12, 13) and normally disposed in a substantially horizontal orientation, and at least one mechanism (20; 42) driven by a series of drive elements (16; 40) provided on one (12) of said lines, the or each mechanism (20; 42) being associated with a respective one (14) of said pair of wheels and arranged to guide each tray (15) in turn during passage between the two levels associated with the mechanism so that the orientation of the trays (15) remains substantially horizontal, characterised in that the or each mechanism is a reciprocating mechanism comprising first and second arms (23, 24; 43, 44) pivotally connected to the frame (11) at spaced apart positions, and a third arm (25; 45) pivotally connected to the free ends of the first and second arms (23, 24; 43, 44), the spacing between the pivotal connections on the first arm (23; 43) being equal to the spacing between the pivotal connections on the second arm (24; 44) and the spacing between the pivotal connections on the frame (11) being equal to the spacing between the pivotal connections on the third arm (25; 45), the third arm having secured thereto means (28; 48) for receiving the drive elements (16) and means (29; 47) for guiding each tray (15) in turn.

2. A conveyor as claimed in Claim 1 characterised in that the pivotal mountings between the trays (15) and one (12) of the lines are used as the drive elements (16; 40).

3. A conveyor as claimed in Claim 1 or Claim 2 characterised in that each tray (15) is provided with a guide pin (18) and each reciprocating mechanism (20; 42) includes means (29; 47) to receive the guide pins (18) in turn so as to guide the trays (15).

4. A conveyor as claimed in any one of the preceding claims characterised in that a stationary guide member (60) is associated with each mechanism.

**Revendications**

1. Convoyeur alignes sans fin, comprenant un bâti (11), une paire de lignes sans fin (12, 13) disposées parallèlement l'une à l'autre et aménagées pour passer le long d'une série de niveaux horizontaux une série de paires de roues (14) montées de façon rotative sur le bâti (11) pour guider les lignes (12, 13) le long de ladite série de niveaux, une série de plateaux (15) montés de façon povotante sur les lignes (12, 13) et disposés normalement selon une orientation sensiblement horizontale, et au moins un mécanisme (20; 42) entraîné par une série d'éléments d'entraînement (16; 40) prévus sur l'une (12) desdites lignes, le ou chacun des mécanismes (20; 42) étant associé à une roue respective (14) de ladite paire de roues et agencé pour guider chaque plateau (15) tour à tour pendant son passage entre les deux niveaux associés au mécanisme de manière que l'orientation des plateaux (15) reste sensiblement horizontale, caractérisé en ce que le ou chacun des mécanismes est un mécanisme de va-et-vient comprenant des premier et second bras (23, 24; 43, 44) reliés de façon pivotante au bâti (11) dans des positions espacées, et un troisième bras (25; 45) relié de façon pivotante aux extrémités libres des premier et second bras (23, 24; 43, 44), l'espacement entre les liaisons pivotantes sur le premier bras (23; 43) étant égal à l'espacement entre les liaisons pivotantes sur le second bras (24; 44) et l'espacement entre les liaisons pivotantes sur le bâti (11) étant égal à l'espacement entre les liaisons pivotantes sur le troisième bras (25; 45), le troisième bras comprenant des moyens (28; 48) fixés sur lui pour recevoir les éléments d'entraînement (16), et des moyens (29; 47) pour guider tour à tour chaque plateau (15).

2. Convoyeur selon la revendication 1, caractérisé en ce que les montages pivotants entre les plateaux (15) et l'une (12) des lignes sont utilisés en tant qu'éléments d'entraînement (16; 40).

3. Convoyeur selon la revendication 1 ou la revendication 2, caractérisé en ce que chaque plateau (15) est muni d'une tige de guidage (18) et en ce que chaque mécanisme de va-et-vient (20; 42) comprend des moyens (29; 47) pour recevoir les tiges de guidage (18) tout à tour de manière à guider les plateaux (15).

4. Convoyeur selon l'une quelconque des revendications précédentes, caractérisé en ce qu'un élément de guidage fixe (60) est associé à chaque mécanisme.

**Patentansprüche**

1. Umlaufförderer mit einem Rahmen (11), einem Paar umlaufender Stänge (12, 13), die parallel zueinander ausgerichtet und zum Vorbeiziehen entlang einer Reihe von horizontalen Ebenen angeordnet sind, einer Reihe von Räderpaaren (14), die drehbar auf dem Rahmen (11) zum Führen der Stränge (12, 13) entlang der Reihe von Ebenen angebracht sind, einer Reihe von Tabletts (15), die drehbar an den Strängen (12, 13) angebracht und normalerweise in einer im wesentlichen horizontalen Ausrichtung angeordnet sind, und mindestens einer Einrichtung (20; 42), die durch eine Reihe von auf einem (12) der Stränge vorgesehenen Antriebselementen (16; 40) angetrieben wird, wobei die oder jede Einrichtung (20; 42) mit einem betreffenden (14) des Räderpaares zusammenhängt und zum Führen nacheinander von jedem Tablett (15) während des Durchganges zwischen den beiden mit der Einrichtung zusammenhängenden Ebenen so angeordnet ist, daß die Ausrichtung der Tabletts (15) im wesentlichen horizontal bleibt, dadurch gekennzeichnet, daß die oder jede Einrichtung eine sich hin- und herbewegende Einrichtung ist mit ersten und zweiten Armen (23, 24; 43, 44), die mit Drehzapfen an in einem Abstand befindlichen Stellen an dem Rahmen (11) angebracht sind, und einem dritten Arm (25; 45), der mit Drehzapfen mit den freien Enden des ersten und zweiten Armes (23, 24; 43, 44) verbunden ist, wobei der Abstand zwischen den Drehzapfenverbindungen auf dem ersten Arm (23; 43) gleich ist dem Abstand zwischen den Drehzapfenverbindungen auf dem zweiten Arm (24; 44) und der Abstand zwischen den Drehzapfenverbindungen auf dem Rahmen (11) gleich ist dem Abstand zwischen den Drehzapfenverbindungen auf dem dritten Arm (25; 45), wobei der dritte Arm eine Vorrichtung (28; 48) zum Aufnehmen der Antriebselemente (16) und einer Vorrichtung (29; 47) zum Führen nacheinander eines jeden Tabletts (15) an sich befestigt hat.

2. Förderer nach Anspruch 1, dadurch gekennzeichnet, daß die Drehzapfenhalterungen zwischen den Tabletts (15) und einem (12) der Stränge als Antriebselemente (16; 40) benutzt werden.

3. Förderer nach Anspruch 1 oder 2, dadurch gekennzeichnet, daß jedes Tablett (15) mit einem Führungsstift (18) versehen ist und jede sich hin- und herbewegende Einrichtung (20; 42) eine Vorrichtung (29; 47) zum Aufnehmen nacheinander der Führungsstifte (18) zum Führen der Tabletts (15) aufweist.

4. Förderer nach einem der vorhergehenden Ansprüche, dadurch gekennzeichnet, daß ein feststehendes Führungsteil (60) mit jeder Einrichtung in Zusammenhang steht.

Fig.1.

11 20 25 26 23 27 24 31 21 22 29 15 12 28 30 14 19 19 15

Fig.2.

Fig.3

Fig. 4.

Fig. 5.

Fig. 6.

0 083 500

Fig.7.